# FASCICULE DE BREVET EUROPEEN

(11) **EP 1 514 721 B1**
(45) Date de publication et mention de la délivrance du brevet: **10.10.2007**
(21) Numéro de dépôt: 04360075.8
(22) Date de dépôt: 31.08.2004
(51) Int. Cl.: B60K 37/06

(54) **Multifunction User Interface**
Multifunktionsbedieneinrichtung
Dispositif de commande multifonction

(30) Priorité: 09.09.2003 FR 0310631
(43) Date de publication de la demande: 16.03.2005
(73) Titulaire: Delphi Technologies Inc., Troy, Michigan 48007 (US)
(72) Inventeur: Trussel, Gary, 67230 Westhouse (FR)
(74) Mandataire: Merckling, Norbert

(56) Documents cités:
- EP-A- 0 839 682
- DE-A- 19 809 427
- DE-A- 19 951 968
- FR-A- 2 822 417

## Description

La présente invention concerne un dispositif de commande multifonction doté d'une pluralité d'organes de commande, en particulier de commutation, pour la mise en oeuvre de plusieurs ensembles fonctionnels distincts.

Cette invention est notamment destinée à être utilisée dans le domaine de l'automobile. Dans les véhicules, dans le passé, la plupart des commutateurs étaient situés dans le tableau de bord. Récemment, compte tenu de l'accroissement constant et important du nombre de ces commutateurs, reflétant la multiplication et l'automatisation de plus en plus poussée des fonctions offertes aux utilisateurs, d'autres espaces ont été utilisés pour l'implantation des organes de commande. Ainsi, des commandes sont à présent disponibles au niveau du volant, dans les espaces situés entre les sièges du conducteur et du passager avant, au niveau des portières, etc.

Le nombre des commandes continuant à augmenter, il ne s'agit à présent plus seulement de trouver des nouveaux espaces pour les localiser, mais également d'augmenter leur densité dans les endroits déjà utilisés, sans préjudicier à leur ergonomie de fonctionnement. Ce souci d'ergonomie ne doit pas masquer les contraintes économiques, qui s'accommodent cependant de la densification aboutissant à concentrer le maximum de composants aux mêmes endroits. La conception des nouvelles commandes s'effectue donc à partir de ces contraintes de regroupement et de compacification.

Ce sont ces objectifs combinés de concentration, de compacification et d'ergonomie qui ont présidé à la naissance de l'invention. Le dispositif de commande qui en fait l'objet, facilement intégrable dans plusieurs parties du véhicule, par exemple le volant, le tableau de bord, les portières ou la console centrale, a pour but de concentrer les commandes relatives à plusieurs fonctions au même endroit tout en préservant une grande commodité d'utilisation.

A cet effet, le dispositif de l'invention est constitué d'un corps support des organes de commande présentant une surface externe permettant la délimitation de secteurs distincts, chacun regroupant les organes de commande dédiés à un ensemble fonctionnel, le corps support étant mobile entre des positions stables discrètes en nombre correspondant à celui des secteurs, dont une position d'activation pouvant être occupée successivement par la totalité des secteurs, les organes de commande du secteur qui occupe ladite position d'activation étant les seuls activés et leur manipulation suivie d'effets.

Le dispositif de l'invention permet d'une part de regrouper, et par conséquent de séparer, les organes de commande qui relèvent de différentes fonctions, et d'autre part d'en sélectionner un seul groupe correspondant à un ensemble fonctionnel homogène, c'est-à-dire en général à un équipement particulier du véhicule.

La solution adoptée de proposer, au même endroit dans le véhicule, différents groupes de commande relatifs à différents équipements. Il convient ensuite de localiser le dispositif de commande à un endroit facilement accessible par l'utilisateur, et d'orienter le secteur activé, c'est-à-dire celui dont les commandes sont opérationnelles, de manière à ce que l'utilisateur puisse les manipuler avec le plus grand confort.

De tels dispositifs de commande sont déjà connus, et par exemple décrits dans le document EP 0 839 682, mais ils impliquent nécessairement un déplacement pour peu que l'utilisateur veuille changer de groupe d'organes de commande. Selon la présente invention (c page 3).

Différentes configurations géométriques sont bien entendu possibles pour le corps support des organes de commande. Ainsi, il peut par exemple prendre la forme d'un cylindre de directrice d'allure circulaire, mobile en rotation autour de son axe central. Les secteurs périphériques sont en l'espèce délimités par des génératrices du cylindre.

La rotation du cylindre permet de positionner en face de l'utilisateur le secteur angulaire intégrant les commandes de l'équipement dont il souhaite faire changer l'état. Il est à noter que le dispositif de commande de l'invention, du fait qu'il ne permet l'activation que du secteur de surface externe le plus immédiatement accessible, empêche toute fausse manipulation puisque les autres équipements en principe contrôlables par le dispositif ne peuvent être actionnés, et qu'aucun organe de commande n'est activé pendant le déplacement du corps support entre deux positions stables.

Selon une alternative, le corps support peut être un prisme droit à section polygonale, mobile en rotation autour d'un axe central et dont le nombre de positions discrètes distinctes est égal au nombre de côtés du polygone, puisque chaque secteur est dans ce cas défini entre deux arêtes consécutives du prisme.

Dans les deux cas, c'est-à-dire pour les géométries circulaires et polygonales, les secteurs angulaires sont de préférence de surface égale. Le nombre d'organes de commande associé à chaque ensemble fonctionnel ou équipement pouvant cependant être relativement différent de l'un à l'autre, l'égalité des segments n'est bien entendu pas une condition fonctionnelle.

Il est possible de mettre en oeuvre un fonctionnement avec une hiérarchisation prédéterminée des groupes d'organes de commande. Cette hiérarchisation peut se faire suivant différentes valeurs de sélection, par exemple la sécurité, la fréquence d'utilisation ou autre.

Ainsi, il est prévu qu'après une durée prédéterminée sans qu'aucune action n'ait été détectée, des moyens moteurs déplacent automatiquement le corps support des organes de commande de telle sorte que ceux d'un unique secteur prédéterminé soient ramenés prioritairement dans la position d'activation.

Selon une variante, l'entraînement du corps support est alors associé à une détection de la volonté de l'utilisateur de changer de face active par un interrupteur, par exemple à rupture, ou encore capacitif, inductif ou autre.

Sur un plan plus structurel, selon une configuration possible, le corps support peut être constitué successivement d'une enveloppe externe, d'un clavier comportant les touches des commutateurs, d'un circuit imprimé intégrant notamment les composants de commutation, et d'un noyau central supportant le circuit imprimé, l'enveloppe externe comportant les touches du clavier ou permettant d'y avoir accès.

L'ensemble de ces éléments est mobile lorsque l'entraînement manuel ou motorisé est déclenché. Il est à noter que les déplacements peuvent être de plusieurs types : rotatifs, translatifs, voire complexes...

A titre d'exemple d'application possible, le dispositif de commande de l'invention peut être utilisé dans la branche d'un volant pour la commande d'équipements de type radio, téléphone, système de navigation, etc.

A titre de variante, l'invention peut encore être utilisé dans la console disposée dans la portière, pour la commande des rétroviseurs, des vitres latérales, etc.

Alternativement encore, le dispositif de l'invention peut être positionné dans une console centrale disposée entre les sièges avant du véhicule.

Selon un exemple de mise en place de la hiérarchisation des différents secteurs, on peut prévoir que la commande des vitres, beaucoup plus fréquemment utilisée que celle des rétroviseurs, précède cette dernière dans la hiérarchie. En suivant cette hypothèse, même après une manipulation des commandes des rétroviseurs, le corps support reviendrait automatiquement à la position de commande des vitres après une certaine durée, en l'absence de toute manipulation ultérieure des organes de commande pendant une certaine durée.

L'invention va à présent être décrite plus en détail, en référence aux figures disposées en annexe, pour lesquelles :
- la figure 1 est une vue en perspective d'une configuration prismatique d'un dispositif de commande selon l'invention ;
- la figure 2 représente, toujours en perspective, une configuration annulaire destinée à être implantée par exemple dans une des branches d'un volant;
- la figure 3 complète la figure 2, en montrant la configuration de la figure précédente déployée afin de montrer sa structure; et
- la figure 4 représente schématiquement un volant de véhicule automobile doté d'une configuration annulaire telle que représentée en figures 2 et 3.

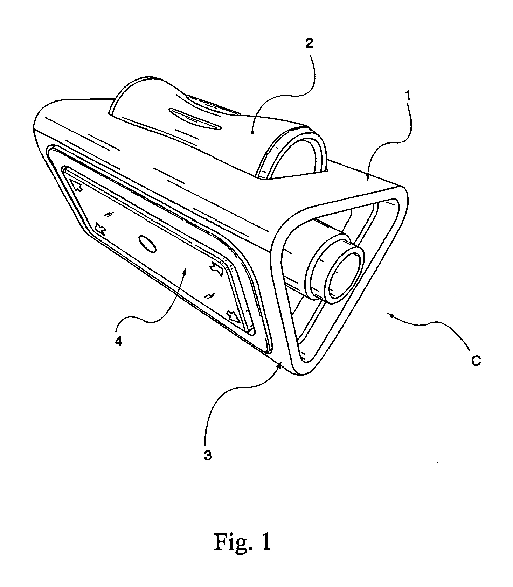

En référence à la figure 1, le dispositif de commande (C) selon l'invention prend la forme d'un prisme droit à section triangulaire dont deux des faces sont apparentes.

La face supérieure (1) comporte une molette de commande des vitres, opérable par pression autant que par rotation pour distinguer les différents signaux à envoyer auxdites vitres (ouverture, fermeture, par à-coups, en continu, etc). Cet organe de commande prend la forme d'un tambour (2) dont la partie centrale moletée se resserre radialement. La seconde face visible (3) comporte par exemple un élément de commande de la position des rétroviseurs, lequel est schématisé sous la forme d'une plaque (4) de commande tactile.

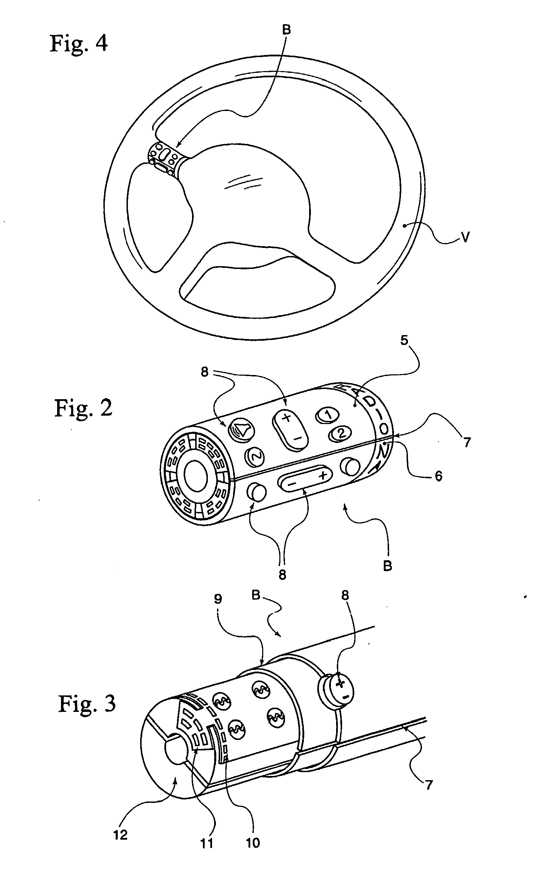

La figure 2 montre une variante de dispositif de commande de l'invention en forme de bague annulaire (B) intégrable dans un volant (V) (voir figure 4). A l'inverse de la configuration de la figure 1, dans laquelle les côtés ou les secteurs surfaciques (1, 3) externes de l'enveloppe prismatique sont bien délimités, dans le cas de bague annulaire (B) la délimitation est plus virtuelle. En l'occurrence, chaque secteur (5, 6) est séparé des secteurs adjacents par une ligne parallèle à la génératrice du cylindre. Pour des raisons de fabrication et de montage, la séparation entre deux secteurs contigus peut dans certains cas être matérialisée par une fente (7). Celle-ci peut correspondre à la séparation de l'enveloppe en plusieurs pièces, à des fins d'assemblage.

Dans la représentation de la figure 2, l'un des secteurs (5) comporte les boutons de commande de la radio du véhicule, alors que l'autre secteur visible (6) comporte les organes de commande de la navigation.

Ces fonctions sont par nature plus particulièrement destinées à être implantées dans un volant, du fait de la nécessité de leur accessibilité pendant la phase de conduite.

L'enveloppe externe du corps support, telle que représentée, est réalisée en un matériau rigide percé de fenêtres permettant l'émergence des boutons de commande (8).

La figure 3 représente de manière plus précise l'intérieur de la bague annulaire (B). En progressant vers l'axe de rotation du système, la couche qui vient immédiatement après l'enveloppe externe rigide est constituée d'une couche flexible (9), par exemple en silicone, dotée de boutons (8) auxquels ce matériau confère une élasticité suffisante pour revenir en position initiale après un appui sur lesdits boutons. Cette couche (9) constitue le clavier, et transmet les ordres de l'utilisateur aux composants de commutation du circuit électronique.

Au-delà de la couche (9) se trouve un circuit imprimé flexible (10) muni des composants nécessaires à la réalisation des commutations et à la transmission des signaux correspondant aux changements d'états. Le circuit imprimé flexible (10) est doté de prolongements (11), également flexibles, formant des zones de commutation prévues pour coopérer avec un collecteur fixe, par exemple constitué de lames de contact mécaniquement reliées au volant et fixes par rapport à un référentiel attaché à celui-ci. Ces zones de commutation sont en nombre correspondant au nombre de secteurs délimités dans le corps support, c'est-à-dire au nombre d'ensembles fonctionnels à gérer.

En figure 3, seule une zone de commutation (11) est représentée, pour clarifier la figure. En revanche, la figure 2 montre l'existence de quatre de ces zones, ce qui suggère l'existence de quatre secteurs périphériques, et par conséquent la commande de quatre ensembles fonctionnels distincts.

Le circuit imprimé flexible (10) est enroulé sur un noyau (12), qui gère la rotation de la bague annulaire (B) par rapport au reste du volant (V).

Dans la représentation de la figure 3, le noyau (12) est représenté en deux tronçons hémicylindriques, pour des raisons tenant essentiellement à la fabrication. Le clavier (9), autant que l'enveloppe externe de la bague (B) peuvent également être réalisés sous forme de deux pièces hémicylindriques, toujours pour faciliter le montage.

L'activation et le transfert des informations de et vers le secteur sélectionné se fait via les zones de commutation (11), par exemple par glissement de lames conductrices élastiques solidarisées au reste du volant (non représentées), comme indiqué auparavant.

La figure 4 montre le positionnement d'une bague annulaire (B) par rapport au volant (V). Le fonctionnement s'en déduit aisément: l'utilisateur fait pivoter la bague (B) pour positionner le segment recherché en face de lui. Ce segment est alors le seul activé, et il peut, par manipulation sur les boutons (8), commander et contrôler l'ensemble fonctionnel auquel ce segment se rapporte. L'activation de ce segment est en outre combinée à un accès visuel optimal pour le conducteur.

## Revendications

1. Dispositif de commande (C) multifonction doté d'une pluralité d'organes de commande, en particulier de commutation, pour la mise en oeuvre de plusieurs ensembles fonctionnels distincts, constitué d'un corps support des organes de commande présentant une surface externe permettant la délimitation de secteurs distincts, chacun regroupant les organes de commande dédiés à un ensemble fonctionnel, le corps support étant mobile entre des positions stables discrètes en nombre correspondant à celui des secteurs, dont une position d'activation pouvant être occupée successivement par la totalité des secteurs, les organes de commande du secteur qui occupe ladite position d'activation étant les seuls activés et leur manipulation suivie d'effets, **caractérisé en ce que**, après une durée prédéterminée sans qu'aucune action n'ait été détectée, des moyens moteurs déplacent automatiquement le corps support de telle sorte que les organes de commande d'un unique secteur (1, 3, 5, 6) prédéterminé soient ramenés dans la position d'activation.

2. Dispositif de commande (C) multifonction selon la revendication précédente, **caractérisé en ce que** le corps support des organes de commande (8) est un cylindre de directrice d'allure circulaire mobile en rotation autour de son axe central, les secteurs (5, 6) périphériques étant délimités par des génératrices du cylindre.

3. Dispositif de commande multifonction selon la revendication 1, **caractérisé en ce que** le corps support des organes de commande est un prisme droit à section polygonale, mobile en rotation autour d'un axe central et dont le nombre de positions discrètes distinctes est égal au nombre de côtés du polygone, car chaque secteur (1, 3) est défini entre deux arêtes consécutives du prisme.

4. Dispositif de commande (C) multifonction selon l'une des revendications 2 ou 3, **caractérisé en ce que** les secteurs (1, 3, 5, 6) angulaires sont de surface égale.

5. Dispositif de commande (C) multifonction selon l'une des revendications précédentes, **caractérisé en ce que** le déplacement du corps support d'une position à l'autre est réalisé à l'aide de moyens d'entraînement motorisés.

6. Dispositif de commande multifonction selon l'une quelconque des revendications précédentes, **caractérisé en ce que** le corps support est constitué successivement d'une enveloppe externe (B), d'un clavier comportant les touches des commutateurs, d'un circuit imprimé (10) intégrant notamment les composants de commutation, et d'un noyau (12) central supportant le circuit imprimé (10), l'enveloppe externe (B) comportant les touches du clavier ou permettant d'y avoir accès.

7. Utilisation d'un dispositif de commande (C) selon les revendications précédentes dans la branche d'un volant (V) pour la commande d'équipements de type radio, téléphone, ou encore d'un système de navigation.

8. Utilisation d'un dispositif de commande (C) selon les revendications précédentes dans la console disposée dans la portière pour la commande d'équipements de type rétroviseurs ou vitres latérales.

9. Utilisation d'un dispositif de commande (C) selon les revendications précédentes dans une console centrale disposée entre les sièges avant du véhicule.

## Claims

1. Multi-functional control device (C) provided with a plurality of control, particularly switching, organs to operate a plurality of distinct functional assemblies, formed of a support body of the control organs having an external surface permitting definition of distinct sectors, each grouping together the control organs dedicated to one functional assembly, the support body being moveable between discrete stable positions corresponding in number to that of the sectors, including an activation position which can be successively occupied by all the sectors, the control organs of the sector which occupies the said activation position being the only ones activated and manipulation of which is followed by effects, **characterised by** the fact that, after a predetermined period without any action being detected, drive means automatically displace the support body in such a manner that the control organs of one single predetermined sector (1, 3, 5, 6) are returned into the activation position.

2. Multi-functional control device (C) as described in the preceding claim, **characterised by** the fact that the support body of the control organs (8) is a cylinder having a circular directrix which is moveable in rotation about its central axis, the peripheral sectors (5, 6) being defined by the generatrices of the cylinder.

3. Multi-functional control device as described in claim 1, **characterised by** the fact that the support body of the control organs is a right prism of polygonal section, moveable in rotation about a central axis and the number of distinct discrete positions of which is equal to the number of sides of the polygon, since each sector (1, 3) is defined between two consecutive edges of the prism.

4. Multi-functional control device (C) as described in one of claims 2 or 3, **characterised by** the fact that the angular sectors (1, 3, 5, 6) are of equal area.

5. Multi-functional control device (C) as described in one of the preceding claims, **characterised by** the fact that the displacement of the support body from one position to the other is effected using motorized drive means.

6. Multi-functional control device as described in any one of the preceding claims, **characterised by** the fact that the support body is formed in succession of an outer casing (B), of a keyboard including the buttons of the switches, of a printed circuit (10) in particular integrating the switching components, and of a central core (12) supporting the printed circuit (10), the outer casing (B) including the buttons of the keyboard or permitting access to them.

7. Use of a control device (C) as described in the preceding claims in the spoke of a steering wheel (V) for control of equipment of radio or telephone type, or of a navigation system.

8. Use of a control device (C) as described in the preceding claims in the console arranged in the vehicle door for controlling equipment of rear-view mirror or side window type.

9. Use of a control device (C) as described in the preceding claims in a central console arranged between the front seats of the vehicle.

## Patentansprüche

1. Multifunktionsbedieneinrichtung (C) zur Implementierung mehrerer verschiedener Funktionseinheiten, die mit einer Mehrzahl von Steuerelementen, insbesondere Schaltelementen, ausgestattet ist, und einen Korpus zum Tragen der Steuerelemente umfasst, der eine äußere Oberfläche aufweist, die die Abgrenzung der verschiedenen Abschnitte zulässt, wobei jeder Abschnitt Steuerelemente zusammenfasst, die einer Funktionseinheit zugeordnet sind, und der Trägerkorpus zwischen diskreten, stabilen Stellungen beweglich ist, deren Anzahl der der Abschnitte entspricht, und von denen eine Aktivierungsstellung nacheinander von allen Abschnitten eingenommen werden kann, wobei die Steuerelemente des Abschnitts, der die Aktivierungsstellung innehat, als einzige aktiviert sind und ihre Betätigung einen Effekt hervorruft, **dadurch gekennzeichnet, dass** eine Treibkraft den Trägerkorpus, nach einer vorbestimmten Zeitdauer, während der keine Betätigung erkannt wurde, automatisch so verstellt, dass die Steuerelemente eines einzelnen, vorbestimmten Abschnittes (1, 3, 5, 6) in die Aktivierungsstellung zurückgebracht werden.

2. Multifunktionsbedieneinrichtung (C) nach dem vorhergehenden Anspruch, **dadurch gekennzeichnet, dass** der Korpus zum Tragen der Steuerelemente (8) ein Zylinder mit kreisartiger Grundfläche ist, welcher um seine zentrale Achse drehbeweglich ist, wobei die Außenabschnitte (5, 6) durch die erzeugende Gerade des Zylinders begrenzt werden.

3. Multifunktionsbedieneinrichtung (C) nach Anspruch 1, **dadurch gekennzeichnet, dass** der Korpus zum Tragen der Steuerelemente (8) ein gerades, um eine zentrale Achse drehbewegliches Prisma mit polygonalem Querschnitt ist, wobei die Anzahl der verschiedenen diskreten Stellungen der Anzahl der Seiten des Vielecks entspricht, weil jeder Abschnitt (1, 3) zwischen zwei aufeinander folgenden Kanten des Prismas definiert ist.

4. Multifunktionsbedieneinrichtung (C) nach einem der Ansprüche 2 oder 3, **dadurch gekennzeichnet, dass** die Winkelabschnitte (1, 3, 5, 6) eine gleich große Fläche haben.

5. Multifunktionsbedieneinrichtung (C) nach einem der vorhergehenden Ansprüche, **dadurch gekennzeichnet, dass** die Bewegung des Trägerkorpus' von einer Stellung in die andere mit Hilfe von motorisierten Antriebsmitteln erfolgt.

6. Multifunktionsbedieneinrichtung (C) nach einem der vorhergehenden Ansprüche, **dadurch gekennzeichnet, dass** der Trägerkorpus auf einander folgend eine äußere Hülle (B), eine Tastatur mit Schalttasten, eine gedruckte Schaltung (10), die insbesondere die Schaltkomponenten beinhaltet, sowie einen zentralen Kern (12), der die gedruckte Schaltung (10) trägt, umfasst, wobei die äußere Hülle (B) die Tasten der Tastatur beinhaltet oder den Zugang zu selbigen gestattet.

7. Nutzung einer Multifunktionsbedieneinrichtung (C) nach den vorhergehenden Ansprüchen in der Speiche eines Lenkrades (V) zur Steuerung von Ausrüstungen wie Radio, Telefon oder etwa eines Navigationssystems.

8. Nutzung einer Multifunktionsbedieneinrichtung (C) nach den vorhergehenden Ansprüchen in der in der Fahrzeugtür angebrachten Konsole zur Steuerung von Ausrüstungen wie Rückspiegel oder Seitenfenster.

9. Nutzung einer Multifunktionsbedieneinrichtung (C) nach den vorhergehenden Ansprüchen in einer zwischen den Vordersitzen des Fahrzeuges angeordneten Mittelkonsole.
